# EUROPÄISCHE PATENTSCHRIFT

(11) **EP 1 034 097 B1**
(45) Veröffentlichungstag und Bekanntmachung des Hinweises auf die Patenterteilung: **05.03.2003**
(21) Anmeldenummer: 98964369.7
(22) Anmeldetag: 23.11.1998
(51) Int. Cl.: B60R 21/16

(54) **VORRICHTUNG ZUR BEEINFLUSSUNG DER ENTFALTUNG EINES GASSACKS EINES AIRBAGMODULS**
DEVICE FOR INFLUENCING THE DEPLOYMENT OF A GAS BAG IN AN AIRBAG MODULE
DISPOSITIF POUR INFLUER SUR LE DEPLOIEMENT DU SAC GONFLABLE D'UN MODULE D'AIR BAG

(30) Priorität: 26.11.1997 DE 29721678 U
(43) Veröffentlichungstag der Anmeldung: 13.09.2000
(73) Patentinhaber: Takata-Petri AG, 63743 Aschaffenburg (DE)
(72) Erfinder: THOMAS, Michael, D-63868 Grosswallstadt (DE)
(74) Vertreter: Baumgärtel, Gunnar, Dr.
(86) Internationale Anmeldenummer: DE9803494
(87) Internationale Veröffentlichungsnummer: WO99028163

(56) Entgegenhaltungen:
- EP-A- 0 586 131
- EP-A- 0 593 172
- EP-A- 0 600 598
- EP-A- 0 878 358
- FR-A- 2 219 034
- GB-A- 2 265 118
- US-A- 5 018 762
- US-A- 5 464 250

## Beschreibung

Die Erfindung betrifft eine Vorrichtung zur Beeinflussung der Entfaltung eines Gassacks eines Airbagmoduls nach dem Oberbegriff des Anspruchs 1.

Die Entfaltung des Gassacks muß z.B. für sein verbessertes OOP-Verhalten insbesondere in den Fällen mit zusätzlichen Mitteln gesteuert werden, in denen ein Ausströmen des Gases in der Art erfolgt, daß sich der Gassack nicht gleichmäßig oder nicht symmetrisch in Richtung des Insassen entfaltet, bzw. daß er ungewollt in eine bestimmte Richtung gelenkt wird, also besonders in Fällen, in denen die Abströmöffnungen am Generator nicht in der Modulmitte sondern asymmetrisch zur Modulmitte angebracht sind. Ein Beispiel hierfür sind die meisten Hybridgasgeneratoren bei Beifahrerairbagmodulen. Zur Beeinflussung der Entfaltung eines Gassacks eines Airbagmoduls sind unterschiedliche Lösungen bekannt geworden.

So ist aus der DE 44 42 202 A1 ein Beifahrer-Airbagmodul bekannt, das zur Beeinflussung des in den Gassack einströmenden Gases mit unterschiedlichen Diffusoren ausgestattet ist, die in Richtung der gewünschten Hauptentfaltungsrichtung des Gassackes größere Abströmöffnungen aufweisen.

Aus der DE-OS 2 030 863 ist es bekannt, zur Beeinflussung der Entfaltung des Gassackes Reißnähte vorzusehen. Dabei kann sich der Gassack in einer ersten Phase bis zu einer Größe entfalten, die die intakten Reißnähte zulassen. Durch den sich verstärkenden Innendruck reißen in der sich anschließenden zweiten Phase die Reißnähte und der Gassack kann sich nun bis zu seiner vollen Größe entfalten.

Aus der gattungsbildenden DE 195 06 886 und der EP-A-0 593 010 A1 sind Airbagmodule bekannt, bei denen zur gerichteten Entfaltung des Gassackes Fangbänder vorgesehen sind. Diese erstrecken sich ausgehend vom Gasgenerator zu unterschiedlichen Stellen des Gassackes, ohne daß sie die Strömung der aus dem Gasgenerator oder dem Diffusor austretenden Gase beeinflussen. Die Fangbänder beeinflussen nur aufgrund ihrer unterschiedlichen Länge und ihrer Befestigungsstelle am Gassack dessen Entfaltung. Die Strömung der Gase wird auch bei diesen mit Fangbändern versehenen Airbagmodulen mittels der Diffusoren beeinflußt.

Die bisher zur Beeinflussung der Ausbreitung des Gassackes bei seiner Entfaltung vorgesehenen Mittel erfordern einen erheblichen zusätzlichen Aufwand.

Schließlich ist aus der US 5 464 250 ein Gassack bekannt, bei dem im Bereich des Gasgenerators zwei Fangbänder vorgesehen sind, die sich in ihrer Breite durch nahezu den gesamten Gassack erstrecken und zusammen mit der Gassackwand einen Kanal für die aus dem Gasgenerator austretenden Gase bilden. Diese Fangbandanordnung ist aber nur für Gassäcke sinnvoll, die nach der Entfaltung flach sind, wie es bei Gassäcken für Seitenairbags der Fall ist, so daß die Fangbänder kurz sind.

Der Erfindung liegt die Aufgabe zugrunde, den Aufwand für die Beeinflussung der Ausbreitung eines Gassackes unabhängig von der Form des Gassackes bei seiner Entfaltung zu verringern.

Erfindungsgemäß wird das gemäß den Merkmalen des Anspruchs 1 erreicht.

Dabei bildet mindestens ein Fangband im Bereich der Ausströmöffnungen eines Gasgenerators oder Diffusors zusammen mit diesen einen Kanal mit Abströmöffnungen für die Beeinflussung des ausströmenden Gases nach Zündung des Gasgenerators.

Das Fangband übernimmt dabei zusätzlich zu seiner üblichen Funktion die Beeinflussung der Strömung in eine vorbestimmte Richtung oder in mehrere vorbestimmte Richtungen. Die Lösung kann zusätzlich zu einem Diffusor oder als Ersatz für einen Diffusor eingesetzt werden. Mittels der Erfindung können die Belastungswerte für die OOP-Position des Insassen reduziert werden.

In einer ersten Ausführungsform sind bei Verwendung eines Rohrgasgenerators zwei sich in ihrer Breite über einen vorbestimmten Längenabschnitt des Rohrgasgenerators erstreckende Fangbänder vorgesehen, wobei sich ein erstes Fangband von einer Seite des Rohrgasgenerators ausgehend bis an die in ihrer Ausdehnung durch das Fangband zu beeinflussende Stelle des Gassacks erstreckt, während das zweite Fangband von der gegenüberliegenden Seite des Rohrgasgenerators ausgeht und oberhalb der Ausströmöffnungen des Rohrgasgenerators oder des Diffusors mit dem ersten Fangband verbunden ist. Bei dieser Ausführungsform wird also zwischen dem Gasgenerator und den beiden Fangbändern ein Kanal gebildet, in den die Gase des Gasgenerators einströmen und dort umgelenkt werden.

In einer zweiten Ausführungsform ist nur ein Fangband vorgesehen, das mit einem Ende den Gasgenerator umschlingt Dieses Ende ist dann oberhalb der Ausströmöffnungen des Gasgenerators oder des Diffusors mit dem Fangband verbunden. Hierbei wird der Kanal also zwischen zwei Abschnitten des Fangbandes und dem Gasgenerator gebildet.

Es ist zweckmäßig, daß das zweite Fangband bzw. das umschlingende Ende des einzigen Fangbandes über der gesamten Fangbandbreite mit dem ersten Fangband bzw. dem Fangband selbst verbunden ist. In diesem Fall entsteht ein über seine gesamte Länge geschlossener Kanal, aus dem das Gas nur an den Stirnseiten austreten kann. Es ist aber auch möglich, an der Verbindungsstelle eine unterbrochene Verbindung oder einzelne punktförmige Verbindungen vorzusehen, so daß ein Teil des Gases auch seitlich aus dem Kanal austreten kann.

Die Verbindung kann z.B. durch Nähen, Schweißen, Kleben oder mittels Klettverschluß erfolgen, wobei eine einfache oder mehrfache Naht vorgesehen sein kann.

Der Verlauf der Verbindungsstelle kann entsprechend der gewünschten Austrittsrichtung der Gase gewählt werden. So kann die Verbindungstelle einen linearen oder zweidimensionalen Verlauf haben.

Eine weitere Ausgestaltung sieht vor, daß der Kanal über seiner Länge eine unterschiedliche Querschnittsgröße aufweist. Dadurch ist es möglich, die Geschwindigkeit des Gases zu beeinflussen, so daß mittels dieser Fangbandvorrichtung auch eine Diffusorwirkung erzielt wird.

In einer Ausführungsform weist der Kanal in einer gewünschten vorzugsweisen Ausbreitungsrichtung des Gassacks einen sich vergrößernden Querschnitt auf.

In einer weiteren Ausführungsform ist vorgesehen, daß das Fangband oder die Fangbänder oder eines der Fangbänder, in dem Bereich, in dem sie den Kanal bilden, Durchbrüche aufweisen. In diesem Fall kann das Gas wie bei einer Ausführungsform mit unterbrochener Naht auch seitlich aus dem Kanal austreten. Bei dieser Ausführungsform wird die Diffusorwirkung noch verstärkt.

In einer weiteren Ausgestaltung ist vorgesehen, daß die Längskanten des Fangbandes bzw. der zwei Fangbänder ausgehend von der Verbindungsstelle des Endes des Fangbandes mit diesem bzw. ausgehend von der Verbindungstelle des zweiten mit dem ersten Fangband über eine vorbestimmte Länge in Richtung des Gasgenerators miteinander verbunden sind. Dadurch entsteht neben dem Kanal ein Schacht, in dem ein Teil des aus dem Gasgenerators ausströmenden Gases zunächst aufgefangen wird. Dieser Gasanteil strömt dann verzögert aus dem Kanal aus. Diese Ausführungsform erlaubt damit eine noch weitergehende Beeinflussung der ausströmenden Gase. Diese Ausführungsform kann auch dahingehend abgewandelt werden, daß die in Richtung des Gasgenerators verlaufende Verbindung unterbrochen ist und mit Abstand von der Verbindung der beiden Fangbänder beginnt. Dadurch sind zusätzliche Abströmöffnungen für das Gas vorhanden.

Da die Fangbänder im Bereich des Gasgenerators durch das heiße Gas zusätzlich beansprucht werden, ist es zweckmäßig, daß die Fangbänder eine unterschiedliche Stärke aufweisen bzw. daß bei der Verwendung eines Fangbandes das den Gasgenerator umschlingende Fangbandende verstärkt ist.

Abweichend von den dargestellten Ausführungsformen können bei Verwendung von zwei Fangbändern beide Teilfangbänder in ihrer Länge und Form variieren und sie müssen nicht gleich oder ähnlich ausgeführt sein.

In einer Ausführungsform ist vorgesehen, daß die Verbindungsstelle des Endes des Fangbandes mit diesem bzw. des zweiten mit dem ersten Fangband als Reißnaht ausgebildet ist. Hierbei wird die Verbindung des Fangbandendes bzw. der beiden Fangbänder zunächst dazu benutzt, um das Gas in die gewünschte Richtung abzulenken. Anschließend reißt die Verbindung teilweise oder ganz auf.

Die Entfaltungscharakteristik des Gassacks kann auch mit anderen Kombinationen aus vertikal, horizontal, schräg oder kurvenartig angeordneten Verbindungen oder Teilverbindungen der Fangbänder beeinflußt werden.

Die Erfindung soll in Ausführungsbeispielen anhand von Zeichnungen erläutert werden. Es zeigen:
- Fig. 1: eine erste Ausführungsform mit zwei Fangbändern,
- Fig. 2: eine zweite Ausführungsform mit zwei Fangbändern mit zusätzlichen Abströmöffnungen in einem Fangband,
- Fig. 3: eine dritte Ausführungsform mit zwei Fangbändern und zusätzlichem Schacht,
- Fig. 4: eine Ausführungsform mit einem Fangband;
- Fig. 5a - h: unterschiedliche Nahtverläufe an der Verbindungstelle zweier Fangbänder in einer Seitenansicht;
- Fig. 6: eine nicht Bestandteil der Erfindung darstellende Vorrichtung, bei der gegenüberliegende Seiten des Gassacks über dem Gasgenerator miteinander verbunden sind;
- Fig. 7: eine perspektivische Ansicht der Vorrichtung nach Fig. 6.

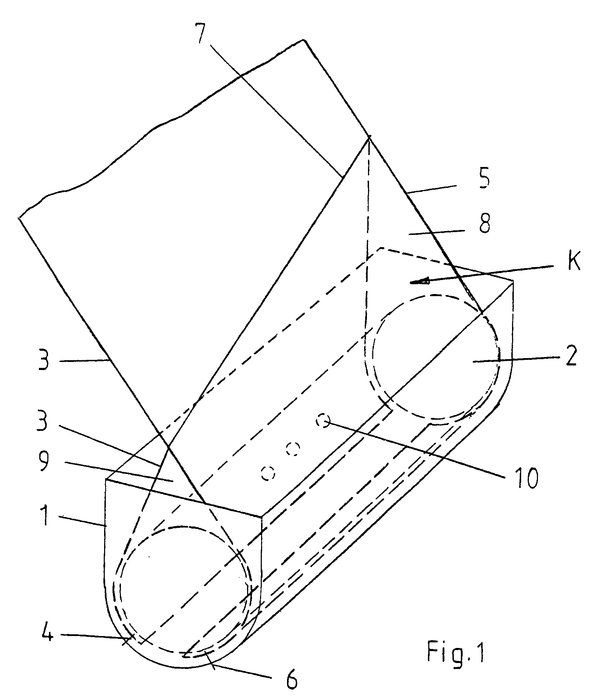

Beim Ausführungsbeispiel der Fig. 1 ist ein Gehäuse 1 für einen Rohrgasgenerator 2 mit einem nicht dargestellten Gassack eines Airbagmoduls angeordnet. Im Bereich des Rohrgasgenerators 2 ist ein erstes Fangband 3 mit einem Ende im Bereich des Gehäusebodens mittels einer Naht 4 mit dem nicht dargestellten Gassack verbunden. Das Fangband kann dort z.B. angenäht, angenietet oder angeklebt sein. Dieses Fangband ist mit seinem anderen Ende an einer vorbestimmten Stelle des Gassacks befestigt (nicht dargestellt), an der dieser in bekannter Weise bei der Entfaltung in seiner Ausdehnung begrenzt werden soll.

Ein zweites Fangband 5 ist auf der gegenüberliegenden Seite des Rohrgasgenerators 2 am Gassack mittels einer Naht 6 befestigt. Dieses Fangband erstreckt sich vorzugsweise nur bis zu einer Naht 7, mittels der es am ersten Fangband 3 befestigt ist. Die Verbindung erfolgt zweckmäßig durch Nähen. Die Naht 7 verläuft gegenüber der Längsachse des Rohrgasgenerators schräg, so daß auf der in der Fig. 1 dargestellten rechten Seite eine Ausströmöffnung 8 größer ist als eine Ausströmöffnung 9 auf der linken Seite, zwischen denen sich ein Kanal K erstreckt, der durch das Gehäuse des Rohrgasgenerators 2 und die Fangbänder 3 und 5 begrenzt ist.

Mit dieser Anordnung zweier Fangbänder kann die Ausbreitungsrichtung des aus den Ausströmöffnungen 10 des Rohrgasgenerators 2 austretenden Gases beeinflußt werden. Das hat zur Folge, daß die Ausbreitungsrichtung des Gassacks in ähnlicher Weise beeinflußt werden kann. Die Fangbandanordnung übernimmt somit die Funktion eines Diffusors. Die Entfaltungscharakteristik des Gasackes wird dabei durch den Verlauf der Naht 7 bestimmt. In Abhängigkeit von der Lage der Ausströmöffnungen des Gasgenerators kann eine symmetrische oder asymmetrisch Entfaltung des Gassacks erreicht werden.

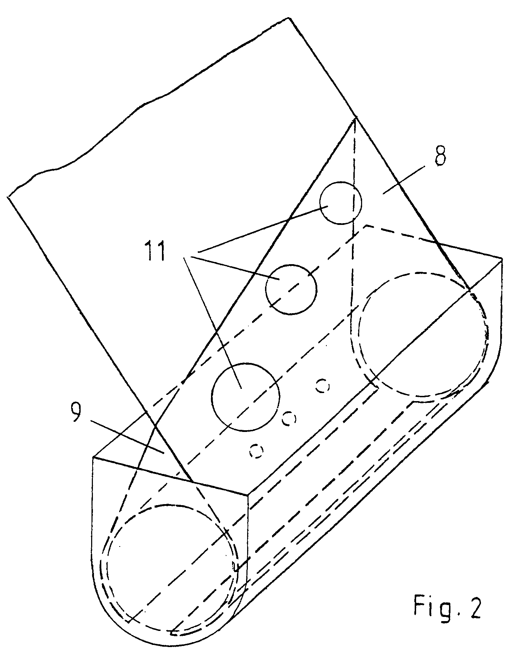

Die Ausführungsform der Fig. 2 entspricht in der Anordnung der Fangbänder, der der Fig. 1. Zusätzlich sind bei dieser Ausführungsform im unteren Fangband 5 Durchbrüche 11 unterschiedlicher Größe vorgesehen. Dadurch kann ein Teil des Gases ohne Umlenkung in den Gassack eintreten, während der andere Teil wie bei der Ausführungsform der Fig. 1 nach Umlenkung durch die seitlichen Abströmöffnungen 8 und 9 austritt. Durch diese Durchbrüche 11, die auch gleich groß sein können, deren Größe und Position entsprechend der vorgesehenen Entfaltungscharakteristik des Gassackes festzulegen ist und die auch im oberen Fangband vorgesehen sein können, kann also die Entfaltung des Gassackes noch weitgehender beeinflußt werden als mit der Ausführungsform der Fig. 1.

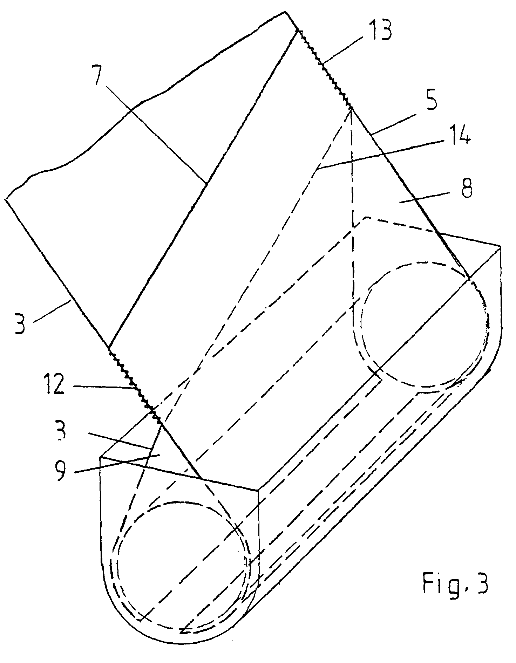

Bei der Ausführungsform der Fig. 3 sind die seitlichen Ränder des ersten Fangbandes 3 und des zweiten Fangbandes 5 ausgehend von der querverlaufenden Naht 7 in Richtung des Gasgenerators über eine vorbestimmte Länge durch Nähte 12, 13 miteinander verbunden. Dadurch entsteht ausgehend von einer Knicklinie 14 des ersten Fangbandes 3 bis zur Naht 7 ein Schacht, in den das aus dem Gasgenerator austretende Gas eintreten kann. Die Naht 7 verhindert das Entweichen des Gases nach oben. Es verbleibt dort solange, bis sich der Druck unterhalb des Schachtes soweit verringert hat, daß das Gas aus dem Schacht ebenfalls aus den Ausströmöffnungen 8, 9 entweichen kann. Durch Ablenken des Gases zu den Seiten des Moduls bzw. nach oben oder unten wird erreicht, daß sich der Gassack zunächst weniger in Richtung eines sich direkt vor dem Modul befindenden Insassen ausbreitet. In Verbindung mit einem seitlich des Gasgenerators gefalteten Gassackes lassen sich besonders günstige Ergebnisse erzielen.

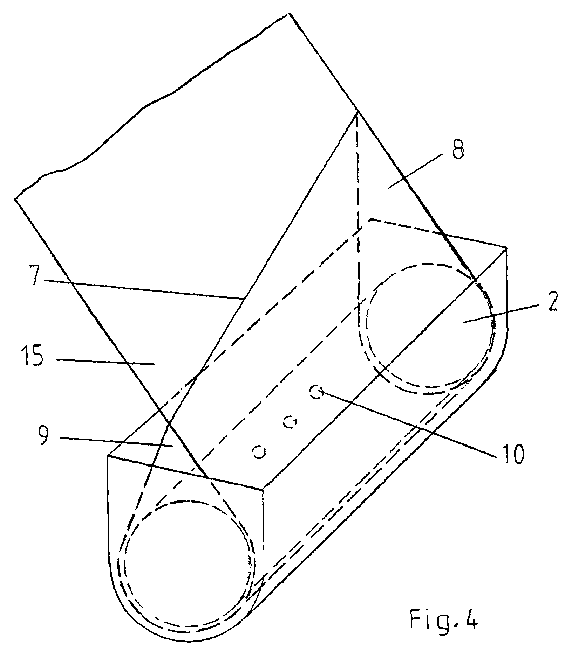

Bei den bisherigen Ausführungsformen wurden zwei Fangbänder verwendet. Bei der Ausführungform der Fig. 4 ist nur ein Fangband 15 vorgesehen. Dieses ist um den Rohrgasgenerator 2 herumgeführt und das Ende des Fangbandes ist oberhalb des Rohrgasgenerators 2 mit dem Fangband mittels der Naht 7 so verbunden, daß wie bei der Ausführungsform der Fig. 1 Abströmöffnungen 8 und 9 vorhanden sind. Diese Ausführungsform mit einem Fangband kann natürlich auch entsprechend den Ausführungsformen der Figuren 2 und 3 abgewandelt werden, so daß deren zusätzliche Vorteile auch hier wirksam werden.

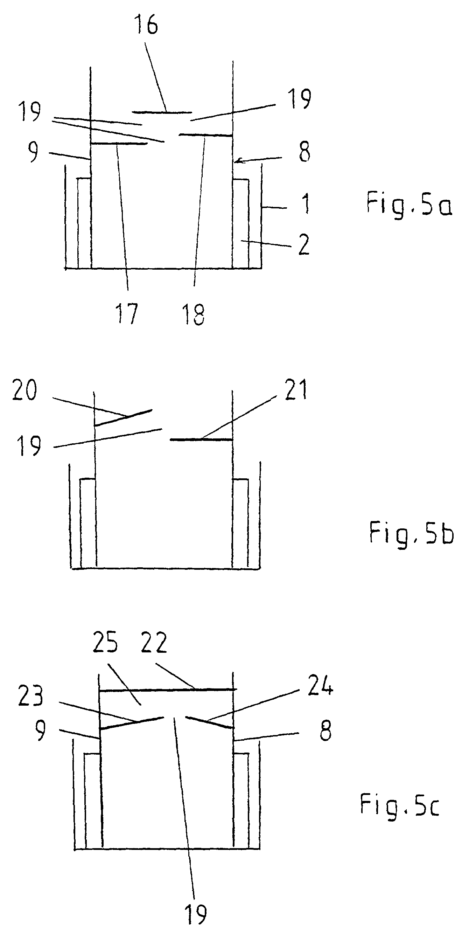

In den Figuren 5a - 5c sind schematisch unterschiedliche Verläufe von Nähten an der Verbindungstelle zweier Fangbänder dargestellt. Bei der Ausführungsform der Fig. 5a sind drei Nähte 16, 17, 18 parallel und mit Abstand zueinander angeordnet, wobei sich die Nähte nicht über die gesamte Breite der Fangbänder 3, 5 erstrecken. Durch die Zwischenräume 19 zwischen den Nähten kann ebenfalls Gas entweichen.

Bei der Ausführungsform der Fig. 5b verlaufen Nähte 20, 21 in unterschiedliche Richtungen, wobei sich auch in diesem Fall die Nähte nicht über die gesamte Breite der Fangbänder erstrecken, so daß ebenfalls ein Zwischenraum 19 vorhanden ist, durch den Gas in den Gassack strömen kann.

Bei der Ausführungsform der Fig. 5c sind eine durchgehende Naht 22 und im Abstand zu dieser zwei Nähte 23, 24 vorgesehen, die sich nicht über die gesamte Breite der Fangbänder erstrecken, so daß ein Zwischenraum 19 vorhanden ist. Bei dieser Ausführungsform ist ein Schacht 25 vorhanden, in den durch den Zwischenraum 19 Gas eintreten kann. Die durchgehende Naht 22 verhindert den Austritt in dieser Richtung in den Gassack, so daß das Gas aus dem Schacht durch die Ausströmöffnungen 8, 9 in den Gassack strömen muß.

Bei der Ausführungsform der Fig. 5d sind die Ränder der Fangbänder zusätzlich zu einer durchgehenden Naht 26 mittels Nähten 27, 28 und 29 miteinander verbunden. Dadurch sind auf einer Seite zwei Ausströmöffnungen 30, 31 und auf der anderen Seite eine Ausströmöfffnung 32 vorhanden, durch die Gas in den Gassack eintreten kann. Durch Veränderung der Nahtlänge und damit Veränderung der Zwischenräume kann die Aufblascharakteristik des Gassackes verändert werden.

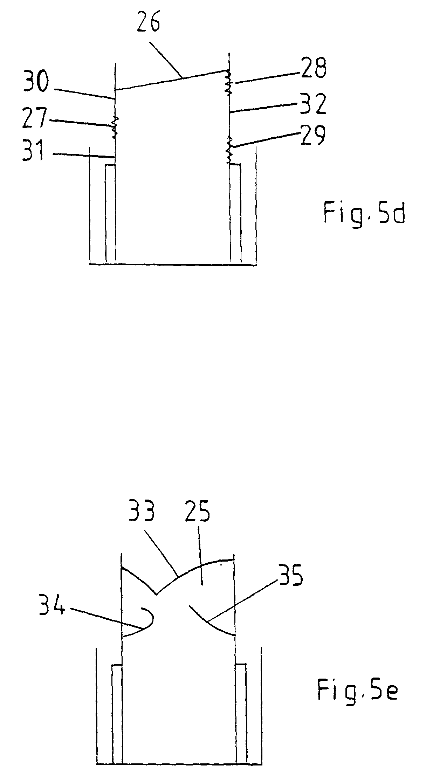

Die Fig. 5e zeigt eine Ausführungsform, bei der eine bogenförmig verlaufende Naht 33 und zusätzlich zwei Nähte 34, 35 vorgesehen sind, so daß ähnlich wie bei der Ausführungsform der Fig. 5c ein Schacht 25 gebildet wird.

In der Ausführungsform der Fig. 5f sind zwei winkelförmige Nähte 36, 37 vorgesehen, zwischen denen eine Abströmöffnung 38 zusätzlich zu den Abströmöffnungen 8, 9 vorhanden ist.

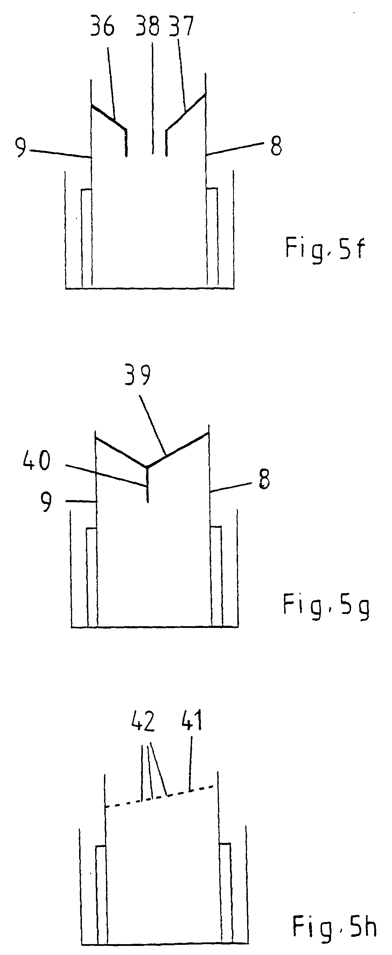

In der Fig. 5g ist eine Ausführungsform dargestellt, bei der eine winkelförmige Naht 39 durch eine senkrecht verlaufende Naht 40 ergänzt ist, die die Strömung durch die Abströmöffnungen 8, 9 beeinflußt.

Schließlich ist in der Fig. 5h eine Ausführungsform dargestellt, bei der eine Naht 41 punktförmig ausgeführt ist, d.h., es sind mehrere punktförmige Verbindungsstellen mit Zwischenräumen 42 vorhanden, durch die ebenfalls Gas in den Gassack strömen kann.

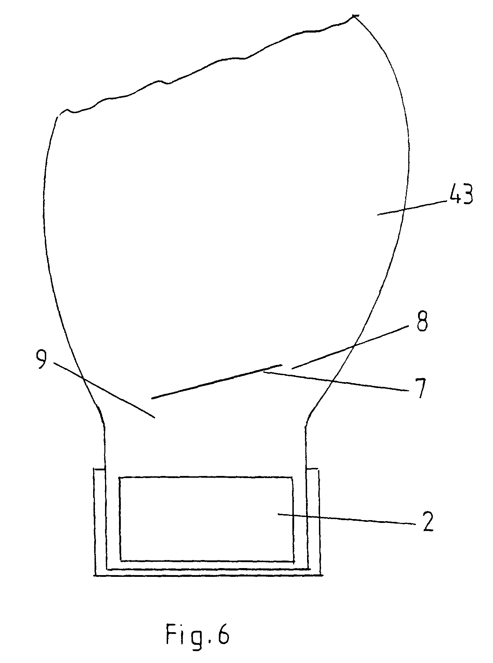

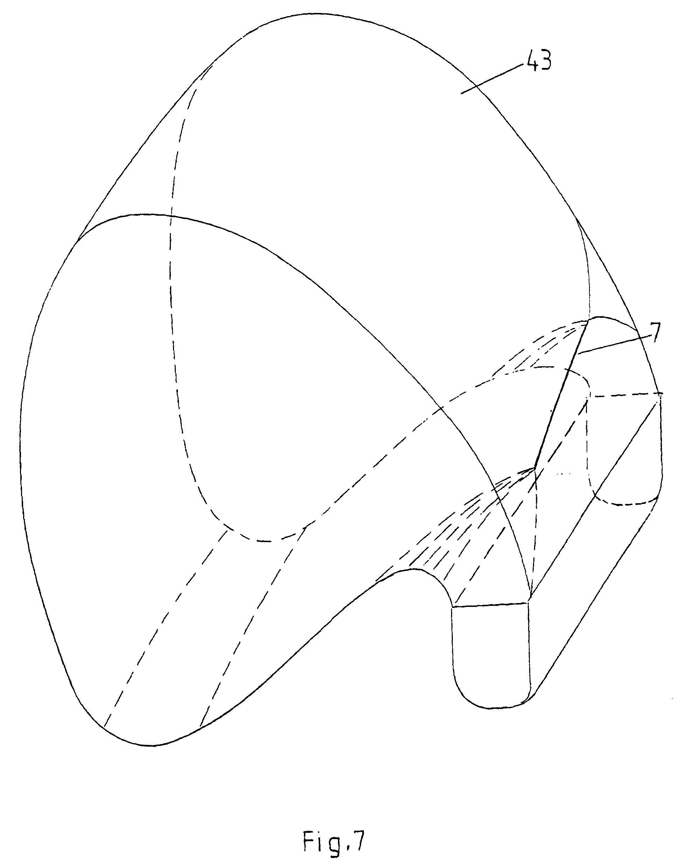

Die Figuren 6 und 7 sind nicht Bestandteil der vorliegenden Erfindung. Diese Darstellung dient lediglich dem besseren Verständnis der Wirkweise der Vorrichtung.

Gemäß Fig. 6 sind gegenüberliegende Seiten eines Gassacks 43 durch eine Naht 7 miteinander verbunden, wobei der Gassack nicht über seine volle Breite zusammengenäht ist. Dadurch ist ohne Verwendung eines Fangbandes oberhalb des Gasgenerators 2 ebenfalls ein Kanal mit Abströmöffnungen 8 und 9 vorhanden, durch die Gas in Richtung des Insassen in den Gassack strömen kann. In der Fig. 7 ist die Vorrichtung der Fig. 6 nochmals perspektivisch mit aufgeblasenem Gassack 43 dargestellt.

## Patentansprüche

1. Vorrichtung zur Beeinflussung der Entfaltung eines zum Schutz eines Fahrzeuginsassen aufblasbaren Gassackes eines Airbagmodules, wobei im Bereich der Ausströmöffnungen (10) eines Rohrgasgenerators (2) oder eines zugeordneten Diffusors ein Kanal (K) für die Beeinflussung des ausströmenden Gases nach Zündung des Rohrgasgenerators (2) vorgesehen ist, der durch ein ein- oder zweiteiliges, sich über einen vorbestimmten Längenabschnitt des Rohrgasgenerators (2) erstreckendes und letzteren zumindest teilweise umschlingendes Fangband (3, 5; 15) zusammen mit dem Rohrgasgenerator (2) oder dem Diffusor gebildet wird und sich zwischen zwei Abströmöffnungen (8, 9) erstreckt, wobei ein Ende des Fangbands (3, 5; 15) mit dem Gassack derart verbunden ist, daß es diesen bei seiner Entfaltung begrenzt,
**dadurch gekennzeichnet,**
**daß** der den Rohrgasgenerator (2) umschlingende Abschnitt des Fangbandes (3, 5; 15) zur Bildung des Kanales (K) oberhalb der Ausströmöffnungen (10) des Rohrgasgenerators (2) oder des Diffusors mit dem Fangband verbunden ist, wobei durch den Verlauf der Verbindungsstelle (7) die Entfaltungscharakteristik des Gassackes bestimmbar ist.

2. Vorrichtung nach Anspruch 1, **dadurch gekennzeichnet, daß** der umschlingende Abschnitt des einteiligen Fangbandes (15) über die gesamte Fangbandbreite mit dem Fangband (15) selbst verbunden ist.

3. Vorrichtung nach Anspruch 1, **dadurch gekennzeichnet, daß** der umschlingende Abschnitt des einteiligen Fangbandes (15) abschnittsweise mit dem Fangband (15) selbst verbunden ist.

4. Vorrichtung nach Anspruch 1, **dadurch gekennzeichnet, daß** der zweite Teil des zweiteiligen Fangbandes (3, 5) über die gesamte Fangbandbreite mit dem ersten Teil des Fangbandes (3, 5) verbunden ist.

5. Vorrichtung nach Anspruch 1, **dadurch gekennzeichnet, daß** der zweite Teil des zweiteiligen Fangbandes (3, 5) abschnittsweise mit dem ersten Teil des Fangbandes (3, 5) verbunden ist.

6. Vorrichtung nach einem der vorhergehenden Ansprüche, **dadurch gekennzeichnet, daß** das ein- oder zweiteilige Fangband (3, 5; 15) in dem Bereich, in dem es den Kanal bildet, Durchbrüche (11) aufweist.

7. Vorrichtung nach Anspruch 6, **dadurch gekennzeichnet, daß** die Durchbrüche (11) unterschiedlich groß sind und/oder unterschiedliche Formen aufweisen.

8. Vorrichtung nach einem der vorhergehenden Ansprüche, **dadurch gekennzeichnet, daß** die Längskanten des einoder zweiteiligen Fangbandes (3, 5; 15) über eine vorbestimmte Länge in Richtung des Rohrgasgenerators (2) miteinander verbunden sind.

9. Vorrichtung nach einem der vorhergehenden Ansprüche, **dadurch gekennzeichnet, daß** die Teile des zweiteiligen Fangbandes (3, 5) eine unterschiedliche Stärke aufweisen oder daß bei der Verwendung eines einteiligen Fangbandes (15) das den Rohrgasgenerator (2) umschlingende Fangbandende verstärkt ist.

10. Vorrichtung nach einem der vorhergehenden Ansprüche, **dadurch gekennzeichnet, daß** die Verbindungsstelle (7) eines Endes des einteiligen Fangbandes (15) mit diesem oder des zweiten Teils des zweiteiligen Fangbandes (3, 5) mit dem ersten Teil des zweiteiligen Fangbandes (3, 5) als Reißnaht ausgebildet ist.

11. Vorrichtung nach mindestens einem der vorhergehenden Ansprüche, **dadurch gekennzeichnet, daß** die Verbindungsstelle (7) eines Endes des einteiligen Fangbandes (15) mit diesem oder des zweiten Teils des zweiteiligen Fangbandes (3, 5) mit dem ersten Teil des zweiteiligen Fangbandes (3, 5) einen linearen oder zweidimensionalen Verlauf hat.

12. Vorrichtung nach mindestens einem der vorhergehenden Ansprüche, **dadurch gekennzeichnet, daß** an der Verbindungsstelle (7) eines Endes des einteiligen Fangbandes (15) mit diesem oder des zweiten Teils des zweiteiligen Fangbandes (3, 5) mit dem ersten Teil des zweiteiligen Fangbandes (3, 5) eine unterbrochene Verbindung (16, 17, 18, 20, 21, 36, 37) vorgesehen ist oder einzelne punktförmige Verbindungen (41) vorgesehen sind.

13. Vorrichtung nach mindestens einem der vorhergehenden Ansprüche, **dadurch gekennzeichnet, daß** die Verbindungsstelle (7) durch eine Näh, Schweiß-, Kleb- oder Klettverschlußverbindung gebildet ist.

14. Vorrichtung nach einem der vorhergehenden Ansprüche, **dadurch gekennzeichnet, daß** der Kanal (K) über seiner Länge eine unterschiedliche Querschnittsgröße aufweist.

15. Vorrichtung nach einem der vorhergehenden Ansprüche, **dadurch gekennzeichnet, daß** der Kanal (K) in der gewünschten Ausbreitungsrichtung des Gassacks einen sich vergrößernden Querschnitt aufweist.

## Claims

1. Device for influencing the deployment of a gas bag of an airbag module which can be inflated for protecting a vehicle occupant, there being provided in the region of the outflow openings (10) of a tubular gas generator (2) or an assigned diffuser a channel (K) for influencing the gas flowing out after the tubular gas generator (2) is ignited, which tube is formed by a one- or two-piece retaining strap (3, 5; 15) extending over a predetermined portion of the length of the tubular gas generator (2) and wrapping at least partly around the latter, together with the tubular gas generator (2) or the diffuser, and extends between two discharge flow openings (8, 9), one end of the retaining strap (3, 5; 15) being connected to the gas bag in such a way that it limits it during its deployment, **characterized in that** the portion of the retaining strap (3, 5; 15) wrapping around the tubular gas generator (2) is connected to the retaining strap to form the channel (K) above the outflow openings (10) of the tubular gas generator (2) or the diffuser, the deployment characteristics of the gas bag being determinable by the course followed by the connecting location.

2. Device according to Claim 1, **characterized in that** the wrapping-around portion of the one-piece retaining strap (15) is connected over the entire retaining strap width to the retaining strap (15) itself.

3. Device according to Claim 1, **characterized in that** the wrapping-around portion of the one-piece retaining strap (15) is connected in certain portions to the retaining strap (15) itself.

4. Device according to Claim 1, **characterized in that** the second piece of the two-piece retaining strap (3, 5) is connected over the entire retaining strap width to the first piece of the retaining strap (3, 5).

5. Device according to Claim 1, **characterized in that** the second piece of the two-piece retaining strap (3, 5) is connected in certain portions to the first piece of the retaining strap (3, 5).

6. Device according to one of the preceding claims, **characterized in that** the one- or two-piece retaining strap (3, 5; 15) has clearances (11) in the region in which it forms the channel.

7. Device according to Claim 6, **characterized in that** the clearances (11) are of different sizes and/or different shapes.

8. Device according to one of the preceding claims, **characterized in that** the longitudinal edges of the one- or two-piece retaining strap (3, 5; 15) are connected to each other over a predetermined length in the direction of the tubular gas generator (2).

9. Device according to one of the preceding claims, **characterized in that** the pieces of the two-piece retaining strap (3, 5) have different thicknesses or **in that**, if a one-piece retaining strap (15) is used, the end of the retaining strap wrapping around the tubular gas generator (2) is strengthened.

10. Device according to one of the preceding claims, **characterized in that** the connecting location (7) of one end of the one-piece retaining strap (15) with itself or of the second piece of the two-piece retaining strap (3, 5) with the first piece of the two-piece retaining strap (3, 5) is designed as a tearing seam.

11. Device according to at least one of the preceding claims, **characterized in that** the connecting location (7) of one end of the one-piece retaining strap (15) with itself or of the second piece of the two-piece retaining strap (3, 5) with the first piece of the two-piece retaining strap (3, 5) follows a linear or two-dimensional course.

12. Device according to at least one of the preceding claims, **characterized in that**, at the connecting location (7) of one end of the one-piece retaining strap (15) with itself or of the second piece of two-piece retaining strap (3, 5) with the first piece of the the two-piece retaining strap (3, 5), an interrupted connection (16, 17, 18, 20, 21, 36, 37) is provided or individual punctiform connections (41) are provided.

13. Device according to at least one of the preceding claims, **characterized in that** the connecting location (7) is formed by a sewn, welded, adhesively attached or touch-and-close fastener connection.

14. Device according to one of the preceding claims, **characterized in that** the channel (K) has a differing cross-sectional size over its length.

15. Device according to one of the preceding claims, **characterized in that** the channel (K) has an enlarging cross section in the desired direction of expansion of the gas bag.

## Revendications

1. Dispositif pour influer sur le déploiement du sac à gaz gonflable d'un module d'airbag pour la protection d'un occupant de véhicule, dans lequel est prévu, dans la zone des ouvertures de sortie (10) d'un générateur de gaz tubulaire (2) ou d'un diffuseur associé, un canal (K) pour influer sur le gaz sortant après allumage du générateur de gaz tubulaire (2), ledit canal étant formé par une bande de garde (3, 5 ; 15) en une ou en deux pièces qui s'étend sur un tronçon prédéterminé en longueur du générateur de gaz tubulaire (2) et qui encercle ce dernier au moins partiellement, conjointement avec le générateur de gaz tubulaire (2) ou avec le diffuseur, et qui s'étend entre deux ouvertures d'évacuation (8, 9), une extrémité de la bande de garde (3, 5 ; 15) étant reliée au sac à gaz de manière à limiter celui-ci lors de son déploiement, **caractérisé en ce que** le tronçon de la bande de garde (3, 5 ; 15) qui encercle le générateur de gaz tubulaire (2) est relié à la bande de garde pour former le canal (K) au-dessus des ouvertures de sortie (10) du générateur de gaz tubulaire (2) ou du diffuseur, la caractéristique de déploiement du sac à gaz pouvant être déterminée par le tracé de l'emplacement de liaison (7).

2. Dispositif selon la revendication 1, **caractérisé en ce que** le tronçon encerclant de la bande de garde (15) en une seule pièce est relié à la bande de garde (15) elle-même sur toute la largeur de la bande de garde.

3. Dispositif selon la revendication 1, **caractérisé en ce que** le tronçon encerclant de la bande de garde (15) en une seule pièce est relié par zones à la bande de garde (15) elle-même.

4. Dispositif selon la revendication 1, **caractérisé en ce que** la deuxième pièce de la bande de gardé (3, 5) en deux pièces est reliée à une première pièce de la bande de garde (3, 5) sur toute la largeur de la bande de garde.

5. Dispositif selon la revendication 1, **caractérisé en ce que** la deuxième pièce de la bande de garde (3, 5) en deux pièces est reliée par zones à la première pièce de la bande de garde (3, 5).

6. Dispositif selon l'une des revendications précédentes, **caractérisé en ce que** la bande de garde (3, 5 ; 15) en une ou en deux pièces présente des ouvertures (11) dans la zone où elle forme le canal.

7. Dispositif selon la revendication 6, **caractérisé en ce que** les ouvertures (11) présentent des tailles différentes et/ou des formes différentes.

8. Dispositif selon l'une des revendications précédentes, **caractérisé en ce que** les arêtes longitudinales de la bande de garde (3, 5 ; 15) en une ou en deux pièces sont reliées l'une à l'autre sur une longueur prédéterminée en direction du générateur de gaz tubulaire (2).

9. Dispositif selon l'une des revendications précédentes, **caractérisé en ce que** les parties de la bande de garde (3, 5) en deux pièces présentent des épaisseurs différentes ou **en ce que** lors de l'utilisation d'une bande de garde (15) en une seule pièce l'extrémité de bande encerclant le générateur de gaz tubulaire (2) est renforcée.

10. Dispositif selon l'une des revendications précédentes, **caractérisé en ce que** l'emplacement de liaison (7) d'une extrémité de la bande de garde (15) en une seule pièce avec celle-ci, ou de la deuxième pièce de la bande de garde (3, 5) en deux pièces avec la première pièce de la bande de garde (3, 5) en deux pièces est réalisé sous forme de ligne de déchirure.

11. Dispositif selon l'une au moins des revendications précédentes, **caractérisé en ce que** l'emplacement de liaison (7) d'une extrémité de la bande de garde (15) en une seule pièce avec celle-ci, ou de la deuxième pièce de la bande de garde (3, 5) en deux pièces avec la première pièce de la bande de garde (3, 5) en deux pièces présente un tracé linéaire ou bidimensionnel.

12. Dispositif selon la revendication 1, **caractérisé en ce qu'**il est prévu, à l'emplacement de liaison (7) d'une extrémité de la bande de garde (15) en une seule pièce avec celle-ci, ou de la deuxième pièce de la bande de garde (3, 5) en deux pièces avec la première pièce de la bande de garde (3, 5) en deux pièces, une liaison interrompue (16, 17, 18, 20, 21, 36, 37), ou **en ce qu'**il est prévu des liaisons ponctuelles individuelles (41).

13. Dispositif selon l'une au moins des revendications précédentes, **caractérisé en ce que** l'emplacement de liaison (7) est formé par une liaison cousue, soudée, collée ou à fermeture auto-agrippante.

14. Dispositif selon l'une des revendications précédentes, **caractérisé en ce que** le canal (K) présente des tailles de section différentes sur sa longueur.

15. Dispositif selon l'une des revendications précédentes, **caractérisé en ce que** le canal (K) présente une section qui augmente dans la direction de déploiement désirée du sac à gaz.
